# EUROPEAN PATENT APPLICATION

(11) **EP 4 841 169 A1**
(43) Date of publication of application: **18.11.2026**
(21) Application number: 25176718.2
(22) Date of filing: 15.05.2025
(51) Int. Cl.: F24D 3/14, F28F 1/40

(54) **POLYMER UNDERFLOOR TUBE**

(71) Applicant: Ernströmgruppen AB, 411 10 Göteborg (SE)
(72) Inventor: Almgren, Daniel, 507 30 BRÄMHULT (SE); Johansson, Kim, 507 30 BRÄMHULT (SE); Nilsson, Eskil, 411 10 GÖTEBORG (SE); Wennergren Helm, Alexander, 411 10 GÖTEBORG (SE)
(74) Representative: AWA Sweden AB

(57) **Abstract**

A polymer underfloor tube for transferring thermal energy to a floor. The polymer underfloor tube is configured to be arranged in the floor for enabling circulation of a fluid in the polymer underfloor tube and for performing heat exchange between the fluid in the polymer underfloor tube and the floor. An inner surface of a first portion of the polymer underfloor tube has a plurality of grooves, the plurality being in the range of 2 to 24, helically extending in the axial direction of the polymer underfloor tube. At least 2 of the helically extending grooves of the first portion have a depth in the range of 0.1mm to 1.5mm and complete at least 1/12 of a revolution in a first direction over a first length of the polymer underfloor tube being in the range 10*the largest cross-sectional distance - 200*the largest cross-sectional distance.

## Description

### TECHNICAL FIELD

The present inventive concept generally relates to underfloor heating and/or cooling systems and tubes for underfloor heating and/or cooling systems.

### BACKGROUND

Underfloor heating or cooling systems is a common practice for heating or cooling a building, used for both homes and bigger buildings such as apartment buildings. Underfloor heating systems may be used both as primary heating system but also as supplementary system for comfort heating. Systems capable of underfloor heating and/or underfloor cooling may generally be referred to as underfloor comfort systems.

Underfloor comfort systems are commonly liquid based. A medium, typically water, is circulated in a pipe system in the floor where heat is transferred from the medium via the floor to the building.

The medium is typically heated at a central part of the underfloor comfort system. Heating of the medium may be done in multiple ways, for example by a heat exchanger, a heat pump or an electric cartridge. A combination of heating methods may be used.

The medium is commonly circulated in a pipe system arranged in the floor. The pipe system is arranged in an efficient pattern to cover the whole floor area. The pipe system is commonly arranged between the slab, or supporting structure of the floor, and the top layer of the floor. A building may have multiple closed-loop underfloor circuits.

Since heat from the medium in the pipe system is transferred to the floor and the building for heating the building, an efficient heat exchange between the medium and the building is appreciated.

The medium is typically circulated in polymer tubes. However, polymer material are generally relatively good thermal insulators, i.e., have relatively low thermal conductivity in comparison with for example metals. This is a drawback when polymer materials are used in heat exchange applications. For the purpose of decreasing the thermal resistance in the tubes, the wall thickness of the tube may be decreased. However, decreasing the wall thickness affects the mechanical properties of the tube, which may be a disadvantage when handling the tube.

Hence, there is room for improvement in the present field.

### SUMMARY

It is an object to overcome, or at least alleviate, at least some of the drawbacks. Further and/or alternative objectives may be understood from the following.

A polymer underfloor tube for transferring thermal energy to a floor is provided. The polymer underfloor tube is configured to be arranged in the floor for enabling circulation of a fluid in the polymer underfloor tube and for performing heat exchange between the fluid in the polymer underfloor tube and the floor. The polymer underfloor tube has a largest cross-sectional distance in a direction perpendicular to an axial direction of the polymer underfloor tube. An inner surface of a first portion of the polymer underfloor tube has a plurality of grooves, the plurality being in the range of 2 to 24, helically extending in the axial direction of the polymer underfloor tube. At least 2 of the helically extending grooves of the first portion have a depth in the range of 0.1mm to 1.5mm and complete at least 1/12 of a revolution in a first direction over a first length of the polymer underfloor tube being shorter than 200*the largest cross-sectional distance. An inner surface of a second portion of the polymer underfloor tube has a plurality of grooves, the plurality being in the range of 2 to 24, helically extending in the axial direction of the polymer underfloor tube. At least 2 of the helically extending grooves of the second portion have a depth in the range of 0.1mm to 1.5mm and complete at least 1/12 of a revolution in a second direction, different from the first direction, over a second length of the polymer underfloor tube being shorter than 200*the largest cross-sectional distance.

An underfloor tube as described above is advantageous since it may cause turbulent, or unsteady, flow of the fluid inside the tube at lower Re-numbers than what is previously disclosed. As a consequence of the turbulent flow a more efficient heat exchange between the fluid and the floor, and eventually the building, may be achieved. A consequence of this is that the fluid does not need to be heated to as high temperatures as typically known in the field for achieving the same heat exchange. The efficient heat exchange will lead to less energy input required for the overall heating system of the building, which will be appreciated.

Further, a turbulent flow at a lower Re-number may improve the use of a variable circulation pump. A variable circulation pump may be controlled more efficiently since the fluid may be circulated at a wider range of flows while maintaining turbulent flow. This allows for the variable circulation pump to work efficiently for a wider range of flows.

At least one of the first length or the second length may be in the range 10*the largest cross-sectional distance - 100*the largest cross-sectional distance, preferably in the range 10*the largest cross-sectional distance - 70*the largest cross-sectional distance.

At least 2 of the helically extending grooves of the first and second portion may form continuous helically extending grooves, alternating direction at least one time over a length of polymer underfloor tube being in the range 10*the largest cross-sectional distance - 200*the largest cross-sectional distance, preferably in the range 10*the largest cross-sectional distance - 100*the largest cross-sectional distance, and more preferably in the range 10*the largest cross-sectional distance - 70*the largest cross-sectional distance.

At least 2 of the helically extending grooves of the first or second portion may have a depth in the range of 0.1mm to 1.2mm, preferably in the range of 0.2mm to 1mm.

At least 2 of the helically extending grooves of the first or second portion may have a depth in the range of 0.2mm to 0.6mm.

At least 2 of the helically extending grooves of the first or second portion may have a cross-sectional area perpendicular to the axial direction in a range from 0.1mm2 - 5.0mm2.

At least 2 of the helically extending grooves of at least one of the first or second portion may have a cross-sectional area perpendicular to the axial direction in a range from 0.2mm2 to 3.0mm2, or in a range from 0.3mm2 to 2.0mm2, or in a range from 0.3mm2 to 1.5mm2.

The plurality of grooves of at least one of the first or second portions may be a plurality in the range of 2 to 20.

The plurality of grooves of at least one of the first or second portions may be a plurality in the range of 2 to 16.

The plurality of grooves of at least one of the first or second portions may be a plurality in the range of 2 to 14.

The helically extending grooves of at least one of the first or second portion may be equidistantly distributed.

The depth of a groove may be measured at a deepest point the groove.

The depth of a groove may be measured in a radial direction of the polymer underfloor tube, from the deepest point of the groove to a boundary having the shape of the outer circumference of the polymer underfloor tube and intersecting the highest points of at least two projections on the inner surface of the polymer underfloor tube.

The polymer underfloor tube may have a circular cross-section having a diameter in the range 8mm - 25mm.

The polymer underfloor tube may have an elliptic cross-section and a longest cross-sectional distance in the range 10mm - 30mm.

An underfloor comfort system comprising a polymer underfloor tube according to any of the embodiments herein is further provided.

A polymer underfloor tube for transferring thermal energy to a floor is further provided. The polymer underfloor tube being configured to be arranged in the floor for enabling circulation of a fluid in the polymer underfloor tube and for performing heat exchange between the fluid in the polymer underfloor tube and the floor. An inner surface of at least one portion of the polymer underfloor tube has a plurality of grooves, the plurality being in the range of 2 to 14, and helically extending in an axial direction of the polymer underfloor tube. At least 2 of the helically extending helically extending grooves have a depth in a range from 0.1mm - 0.6mm.

At least 2 of the helically extending grooves may have a depth in the range of 0.1mm to 0.5mm.

At least 2 of the helically extending grooves may have a depth in the range of 0.1mm to 0.4mm.

The plurality of grooves may be in the range of 2 to 12.

The plurality of grooves may be in the range of 4 to 12.

The plurality of grooves may be in the range of 4 to 10.

The helically extending grooves may complete ¼ of a revolution along the inner surface of the polymer underfloor tube at least every 45mm.

The helically extending grooves may complete ¼ of a revolution along the inner surface of the polymer underfloor tube at least every 30mm.

An inner surface of at least one second portion of the polymer underfloor tube may have a plurality of grooves, the plurality being in the range of 2 to 14, and helically extending in an axial direction of the polymer underfloor tube. The helically extending grooves of the first portion may extend in a first helical direction and the helically extending grooves of the second portion may extend in a second helical direction.

At least one of the first or second portion may comprise at least 2 helically extending grooves being equidistantly distributed.

A polymer underfloor tube for transferring thermal energy to a floor is further provided. The polymer underfloor tube being configured to be arranged in the floor for enabling circulation of a fluid in the polymer underfloor tube and for performing heat exchange between the fluid in the polymer underfloor tube and the floor. An inner surface of at least one first portion of the polymer underfloor tube has a plurality of grooves, the plurality being in the range of 2 to 24, the grooves are helically extending in an axial direction of the polymer underfloor tube, and at least 2 of the helically extending grooves have a depth in the range of 0.1mm to 1.5mm.

The at least 2 of the helically extending grooves may have a depth in the range of 0.1mm to 1.2mm.

The at least 2 of the helically extending grooves may have a depth in the range of 0.2mm to 1mm.

The at least 2 of the helically extending grooves may have a depth in the range of 0.2mm to 0.6mm.

At least 2 of the helically extending grooves of the first or second portion may have a cross-sectional area perpendicular to the axial direction in a range from 0.1mm2 - 5.0mm2.

At least 2 of the helically extending grooves of at least one of the first or second portion may have a cross-sectional area perpendicular to the axial direction in a range from 0.2mm2 to 3.0mm2, or in a range from 0.3mm2 to 2.0mm2, or in a range from 0.3mm2 to 1.5mm2.

The inner surface of the at least one portion of the polymer underfloor tube may have a plurality of grooves, the plurality being in the range of 2 to 20.

The inner surface of the at least one portion of the polymer underfloor tube may have a plurality of grooves, the plurality being in the range of 2 to 14.

The polymer underfloor tube may have a largest cross-sectional distance in a direction perpendicular to the axial direction of the polymer underfloor tube, and the plurality of grooves of the first portion may complete at least 1/12 of a revolution in a first direction, over a first length of the polymer underfloor tube being in the range 10*the largest cross-sectional distance - 200*the largest cross-sectional distance.

The first length may be in the range 10*the largest cross-sectional distance - 100*the largest cross-sectional distance

The first length may be in the range 10*the largest cross-sectional distance - 70*the largest cross-sectional distance.

An inner surface of a second portion of the polymer underfloor tube may have a plurality of grooves, the plurality being in the range of 2 to 24, the grooves of the second portion may be helically extending in an axial direction of the polymer underfloor tube, and the plurality of grooves of the second portion may complete at least 1/12 of a revolution in a second direction, different from the first direction, over a second length of the polymer underfloor tube being in the range 10*the largest cross-sectional distance - 200*the largest cross-sectional distance.

The second length may be in the range 10*the largest cross-sectional distance - 100*the largest cross-sectional distance.

The second length may be in the range 10*the largest cross-sectional distance - 70*the largest cross-sectional distance.

The helically extending grooves of at least one of the first or second portions may complete at least ¼ of a revolution in a first direction along the inner surface of the polymer underfloor tube at least every 90mm.

The helically extending grooves of at least one of the first or second portions may complete at least ¼ of a revolution in a first direction along the inner surface of the polymer underfloor tube at least every 60mm.

The helically extending grooves of at least one of the first or second portion may be equidistantly distributed.

The depth of a groove may be measured at a deepest point the groove.

The depth of a groove may be measured in a radial direction of the polymer underfloor tube, from the deepest point of the groove to a boundary having the shape of the outer circumference of the polymer underfloor tube and intersecting the highest points of at least two projections on the inner surface of the polymer underfloor tube.

The polymer underfloor tube may have a circular cross-section and a diameter in the range 8mm - 25mm.

The polymer underfloor tube may have an elliptic cross-section and a longest cross-sectional distance in the range 10mm - 30mm.

At least 2 of the helically extending grooves of the first and second portion may form continuous helically extending grooves, alternating direction at least one time over a length of polymer underfloor tube being in the range 10*the largest cross-sectional distance - 200*the largest cross-sectional distance, preferably in the range 10*the largest cross-sectional distance - 100*the largest cross-sectional distance, and more preferably in the range 10*the largest cross-sectional distance - 70*the largest cross-sectional distance.

A polymer underfloor tube for transferring thermal energy to a floor is further provided. The polymer underfloor tube being configured to be arranged in the floor for enabling circulation of a fluid in the polymer underfloor tube and for performing heat exchange between the fluid in the polymer underfloor tube and the floor. The polymer underfloor tube has a largest cross-sectional distance in a direction perpendicular to the axial direction of the polymer underfloor tube. An inner surface of a first portion of the polymer underfloor tube has a plurality of grooves, the plurality being in the range of 2 to 24, and helically extending in an axial direction of the polymer underfloor tube. The plurality of grooves of the first portion complete at least 1/12 of a revolution in a first direction over a first length of the polymer underfloor tube being shorter than 200*the largest cross-sectional distance. An inner surface of a second portion of the polymer underfloor tube has a plurality of grooves, the plurality being in the range of 4 to

24, and helically extending in an axial direction of the polymer underfloor tube. The plurality of grooves of the second portion complete at least 1/12 of a revolution in a second direction, different from the first direction, over a second length of the polymer underfloor tube being shorter than 200*the largest cross-sectional distance.

At least one of the first length or the second length may be in the range 10*the largest cross-sectional distance - 100*the largest cross-sectional distance, preferably in the range 10*the largest cross-sectional distance - 70*the largest cross-sectional distance.

At least 2 of the helically extending grooves of the first and second portion may form continuous helically extending grooves, alternating direction at least one time over a length of polymer underfloor tube being in the range 10*the largest cross-sectional distance - 200*the largest cross-sectional distance, preferably in the range 10*the largest cross-sectional distance - 100*the largest cross-sectional distance, and more preferably in the range 10*the largest cross-sectional distance - 70*the largest cross-sectional distance.

At least 2 of the helically extending grooves of the first or second portion may have a depth in the range of 0.1mm to 1.2mm.

At least 2 of the helically extending grooves of the first or second portion may have a depth in the range of 0.2mm to 1mm.

At least 2 of the helically extending grooves of the first or second portion may have a depth in the range of 0.2mm to 0.6mm.

At least 2 of the helically extending grooves of the first or second portion may have a cross-sectional area perpendicular to the axial direction in a range from 0.1mm2 - 5.0mm2.

At least 2 of the helically extending grooves of at least one of the first or second portion may have a cross-sectional area perpendicular to the axial direction in a range from 0.2mm2 to 3.0mm2, or in a range from 0.3mm2 to 2.0mm2, or in a range from 0.3mm2 to 1.5mm2.

The helically extending grooves of the first portion may complete ¼ of a revolution in the first direction along the inner surface of the polymer underfloor tube at least every 150mm, and the helically extending grooves of the second portion may complete ¼ of a revolution in the second direction along the inner surface of the polymer underfloor tube at least every 150mm.

The helically extending grooves of the first portion may complete ¼ of a revolution in the first direction along the inner surface of the polymer underfloor tube at least every 90mm, and the helically extending grooves of the second portion may complete ¼ of a revolution in the second direction along the inner surface of the polymer underfloor tube at least every 90mm.

The plurality of grooves of at least one of the first or second portions may be a plurality in the range of 2 to 20.

The plurality of grooves of at least one of the first or second portions may be a plurality in the range of 2 to 14.

The helically extending grooves of at least one of the first or second portion may be equidistantly distributed.

The depth of a groove may be measured at a deepest point the groove.

The depth of a groove may be measured in a radial direction of the polymer underfloor tube, from the deepest point of the groove to a boundary having the shape of the outer circumference of the polymer underfloor tube and intersecting the highest points of at least two projections on the inner surface of the polymer underfloor tube.

The polymer underfloor tube may have a circular cross-section and a diameter in the range 8mm - 25mm.

The polymer underfloor tube may have an elliptic cross-section and a longest cross-sectional distance in the range 10mm - 30mm.

### BRIEF DESCRIPTION OF THE DRAWINGS

The above, as well as additional objects, features and advantages of the present inventive concept will be better understood through the following illustrative and non-limiting detailed description, with reference to the appended drawings.
Fig. 1 is a schematic illustration of a building having an underfloor comfort system for providing a heating function to the building.
Fig. 2 shows a schematic perspective view of a portion of a polymer underfloor tube according to one embodiment.
Fig. 3A is a schematic cutaway drawing in a perspective view of a portion of a polymer underfloor tube having a circular cross-section.
Fig. 3B is a schematic cutaway drawing in a perspective view of a portion of a polymer underfloor tube having an elliptic cross-section.
Fig. 4A - 4H shows cross-sectional views of portions of a flattened wall of polymer underfloor tube.
Fig. 4G' shows a cross-sectional view of a polymer underfloor tube in its tube-like state.
Fig. 5 is a schematic cutaway drawing in a perspective view of a portion of a polymer underfloor tube according to an embodiment.

### DETAILED DESCRIPTION

In the following, a detailed description of embodiments of the invention will be given with reference to the accompanying drawings. It will be appreciated that the drawings are for illustration only and are not in any way restricting the scope of the invention. Thus, any references to directions, such as "up" or "down", are only referring to the directions shown in the figures. It should be noted that the features having the same reference numerals have the same function, a feature in one embodiment could thus be exchanged for a feature from another embodiment having the same reference numeral unless clearly contradictory. The descriptions of the features having the same reference numerals should thus be seen as complementing each other in describing the fundamental idea of the feature and thereby showing the features versatility.

The boundary of an element is to be understood as the outer or inner periphery that encompasses all of the points of the element without creating recesses. It can be illustrated by the surface created by placing the element in a plastic bag and tightening the plastic around the element, or inflating a plastic bag inside of an element, such that the surface of the plastic bag takes the shortest route between points on the outer or inner periphery of the element which are separated by a recess.

In general, only sections of the pipe lengths are illustrated in the figures. The lengths are however longer in reality, but in order to illustrate the technical features of e.g., the helical groove and dimensions etc. only a section of the pipe lengths are illustrated.

The polymer underfloor tube provided herein has an inner surface having a plurality of helically extending grooves. The purpose of the helically extending grooves is to promote a transition to an unsteady or turbulent flow of heat transfer fluid in the polymer underfloor tube and thereby enhance the thermal mixing in the polymer underfloor tube. With a laminar flow there is a creation of layers of fluid with different temperature across the tube, which reduces the heat exchange between the tube wall and the fluid. The difference in temperature between the fluid and the tube wall becomes less as the heat of fluid that travels closest to the wall in a laminar flow is exchanged more than the heat of fluid in the center of the tube. This effect is reduced by a mixing of the fluid in the underfloor tube which consequently increases the heat transfer and thus the efficiency of the tube and the overall efficiency of the underfloor comfort system.

In the embodiments shown herein, the polymer underfloor tube is made from Crosslinked polyethylene (PEX) or Polyethylene of Raised Temperature resistance (PERT).

The heat transfer fluid typically used in underfloor comfort systems is water.

A diameter Ø of an underfloor tube is typically in the range of 8mm to 25mm. A width I of a single groove is generally in the range of 0.5mm to 2mm, or preferably 0.5mm to 1.5mm. A depth d of a single groove is generally in the range of 0.1mm to 1.2mm, or preferably in the range of 0.2mm to 1mm or even more preferably in the range of 0.2mm to 0.6mm.

In fluid dynamics, the Reynolds number (Re) is a dimensionless quantity that helps predict fluid flow patterns in different situations by measuring the ratio between inertial and viscous forces. At low Reynolds numbers, flows tend to be dominated by laminar flow, while at high Reynolds numbers, flows tend to be turbulent. The turbulence results from differences in the speed and direction of the flow. The Reynolds number is used to predict the transition from laminar to an unsteady or turbulent flow. The introduction of high-velocity fluid into low-velocity fluid creates relative movement between the fluid flows which generates fluid friction, which is a factor in developing an unsteady turbulent flow. The viscosity of the fluid is countering this effect, which means that it is more difficult to get a turbulent flow in fluids with high viscosity. The Reynolds number quantifies the relative importance of fluid friction and viscosity for given flow condition and generates a prediction as to when turbulent flow will occur in a particular situation.

The Reynolds number is defined as: $Re = \frac{uL}{ν} = \frac{ρuL}{μ}$ where:
ρ is the density of the fluid (SI units: kg/m3)
u is the flow speed (m/s)
L is a characteristic length (m)
µ is the dynamic viscosity of the fluid (Pa·s or N·s/m2 or kg/(m·s))
v is the kinematic viscosity of the fluid (m2/s).

The Prandtl number (Pr) is a dimensionless number defined as the ratio of momentum diffusivity to thermal diffusivity. Small values of the Prandtl number, Pr « 1 means the thermal diffusivity dominates, while with large values, Pr » 1 the momentum diffusivity dominates the behavior. In heat transfer problems, the Prandtl number controls the relative thickness of the momentum and thermal boundary layers.

The Prandtl number is defined as: $Pr = \frac{v}{α} = \frac{momentum diffusivity}{thermal diffusivity} = \frac{\frac{μ}{ρ}}{\frac{k}{{c}_{p} ρ}} = \frac{{c}_{p} μ}{k}$ where (in addition to above):
v is the momentum diffusivity (kinematic viscosity, SI units: m2/s)
α is the thermal diffusivity (SI units: m2/s)
*k* is the thermal conductivity (SI units: W/(m·K))
*cₚ* is the specific heat (SI units: J/(kg·K))

The friction factor f is a measure of the resistance to flow by a pipe. It was developed in the 1930s and remains the basis for computing pressure drop due to friction.

A model for simulation of the dynamic properties of tubes using Direct Numerical Simulation (DNS) of fully developed fluid flows in pipes having different inner surface properties have been developed. DNS is a simulation method in computational fluid dynamics in which the Navier-Stokes equations are numerically solved without any turbulence model. This means that the whole range of spatial and temporal scales of the turbulence must be resolved in the computational mesh, from the smallest dissipative scales (Kolmogorov microscales), up to the integral scale associated with the motions containing most of the kinetic energy. The computational cost of DNS is thus very high, even at low Reynolds numbers, which has meant that they have not been feasible with computers available in the past. Instead, predictions of the fluid behavior has had to be estimated from measurements in real-world installations. In the simulations referred to herein, Reynolds number ranges of 1100 - 3300 and Prandtl numbers in the range 20 - 75 have been investigated.

The simulations suing DNS have focused on evaluating the thermohydraulic performance of the tubes at fully developed (hydro- and thermodynamic) conditions.

The performance evaluation is limited to the convective heat transfer between the pipe inner wall and the liquid.

The properties and thereby the measured outcome of a real-world installation of a system of underfloor tubes in a floor is however highly dependent on external factors other than the transition from a laminar to a turbulent flow in the fluid.

The simulations made using the DNS-method shows that a transition from mainly laminar flow to mainly turbulent flow in a smooth pipe without any grooves or recesses along the inner surface occurs at about 2300 Re. The aim with introducing helically extending grooves is to lower the Re-number at which the flow transitions from laminar to turbulent to be able to induce a turbulent flow at lower flow rates. One advantage being that lower flow rates consumes less energy, another being that the underfloor tube can be optimally operated at a range of different flow rates.

The developed Direct Numerical Simulation method have revealed that the friction factor f of the pipe increases when the depth of the recesses is more than 1.5mm. Surprisingly, already in the range 1.5mm - 1.8mm the pressure drop is 10% - 20% higher than in a pipe having an inner surface without the helical recesses and protrusions. From this it has been concluded that depth of the recesses of less than 1.5mm is preferable, less than 1.3mm is even more preferable and less than 1.1mm is even more preferable.

The newly developed Direct Numerical Simulation method have also revealed that a tube having 32 recesses actually is less able to create a turbulent flow in the relevant Re range than a tube having less than 24 grooves. I.e. a tube having 32 grooves requires a substantially higher Re number to transition to a turbulent flow than a tube having 24 grooves, which surprisingly means that the flow rate needs to be higher in a tube having 32 grooves than in a tube having 24 grooves or fewer to obtain the same heat transfer.

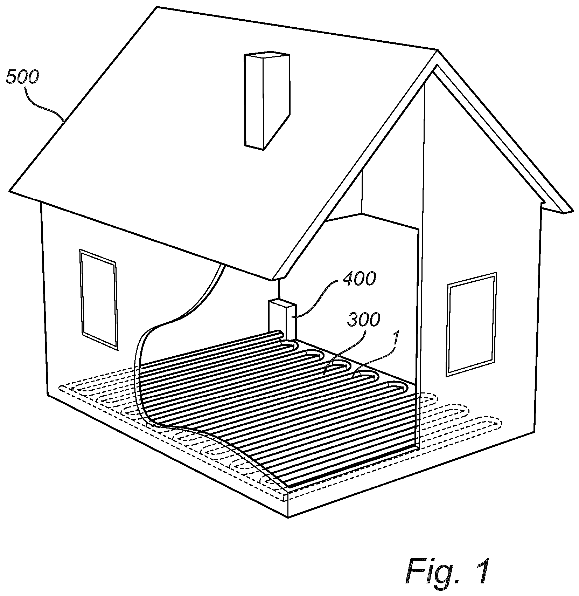

Fig.1 shows a schematic perspective view of a building 500 with an underfloor comfort system. An underfloor comfort system typically comprises a central control unit 400 including a circulation pump and at least one closed-loop tube circuit 300 usually made up of polymer underfloor tube 1 for transporting a heat carrying medium in connection with the control unit 400.

Generally, any building 500 is suitable for underfloor comfort systems. Underfloor comfort systems are commonly used in homes but may also be used in apartment buildings, offices, warehouses, workshops, garages, gyms and stores for example. Underfloor comfort systems may be used as primary heating source of a building 500. Alternatively, underfloor comfort systems may be used as a secondary system for comfort heating in e.g. bathrooms or kitchens.

An underfloor comfort system may be arranged in multi-storey buildings 500. The underfloor circuit 300 may be arranged between stories, such that the same circuit 300 is arranged in the floor of multiple stories. Alternatively, separate closed-loop circuits 300 may be arranged in the floors of different stories. The closed-loop circuits 300, if multiple, may be connected to the same control unit 400 or to separate control units 400 if the building 500 is arranged with multiple control units 400.

The control unit 400 typically comprises a circulation pump for circulating the medium in the underfloor circuit 300. The medium is typically water. A circulation pump may be a constant flow pump, meaning that the pump is rotating at a fixed speed delivering a fixed flow while the pump is on. Alternatively, the pump may be variable flow pump, meaning that different rotations speeds and thereby different flows may be controlled and delivered by the pump. A variable flow pump may be appreciated to achieve an energy efficient system since an energy transfer between the medium and the building 500 may be optimized with such pump.

Further the control unit 400 typically comprises a heat exchanger. The heat exchanger may comprise a second circuit with a second medium. The second medium may be circulated in a bore hole or in a dug trench for collecting geothermal energy. The geothermal energy is extracted by the second medium via thermal diffusion and is later transferred in the heat exchanger of the control unit 400 to the medium in the underfloor circuit 300.

Alternatively, the control unit 400 comprises a heat pump configured to extract thermal energy from outside air and transfer the energy to the medium in the underfloor circuit 300.

Alternatively, or supplementary, the control unit 400 may comprise an electric cartridge which may transfer electric energy to thermal energy. The electric cartridge may be in fluid contact with the medium in the underfloor circuit 300. The electric cartridge may be used as primary heating source of the medium in the underfloor circuit 300 or as a complement during breakdown or power inadequacy of the primary heating source.

The underfloor circuit 300 is generally arranged to spread the thermal energy from the medium in the circuit 300 to the building 500 to achieve a comfortable indoor climate. The underfloor circuit 300 is preferably arranged in an efficient pattern in the floor to spread the heat evenly and efficiently. An underfloor circuit 300 is typically arranged back and forth between opposing walls of a room. A single circuit 300 may extend between multiple rooms. A building 500 may comprise multiple circuits 300.

A length of an underfloor circuit 300 is generally limited by the circulation pump capacity, and the thermal energy carrying capacity of the medium. If one circuit 300 is too long the pressure drop may be too high and/or the thermal transfer may be inefficient at some parts of the circuit 300. Hence, there are common praxis for lengths of underfloor circuits 300. For large buildings 500 where the length of one underfloor circuit 300 is not enough to cover the whole floor area, multiple circuits 300 may be arranged. Multiple circulation pumps may be used for multiple underfloor circuits 300. Alternatively, one variable circulation pump is used in combination with valves to open or close the circulation of medium in specific underfloor circuits 300.

An underfloor circuit 300 generally comprises tubes carrying a liquid medium. The tubes are typically installed in wood boards with repetitive parallel grooves. The grooves may be sized and shaped to efficiently fit the tubes such that a tube in a groove is submerged under a level plane achieved by the wood boards. The boards are typically arranged on the splat or supporting structure of the building 500 or storey. The tubes are typically arranged in the grooves. The grooves are parallel to each other and are placed with approximately 10-40cm distance between each other. For efficient energy transfer, a metal sheet may be placed in the groove and extend to the non-grooved part of the wooden board. This may improve the thermal energy transfer to the from the medium in the circuit 300 to the floor covering.

Alternatively, the tubes of the underfloor circuit 300 may be embedded in the screed of a building 500. Such installation typically uses plastic holders placed on the concrete slab which supports the tubes of the underfloor circuit 300 at a predetermined height above the slab. The tubes and the holders are later embedded in the screed. A similar installation method may be used to install underfloor comfort systems as a retrofit on top of existing floor.

For an energy efficient, and often also cost efficient, underfloor comfort system it will be appreciated if the heat exchange between the fluid in the underfloor circuit 300 and the floor is efficient. As described herein, a turbulent flow of the fluid in the underfloor circuit 300 transfers heat more efficient than a laminar flow. A consequence of this is that the fluid may not need to be heated, generally at the control unit 400, to as high temperatures as typically known in the field for achieving the same heat exchange. The efficient heat exchange will lead to less energy input, generally at the control unit 400, required for the overall heating system of the building, which will be appreciated.

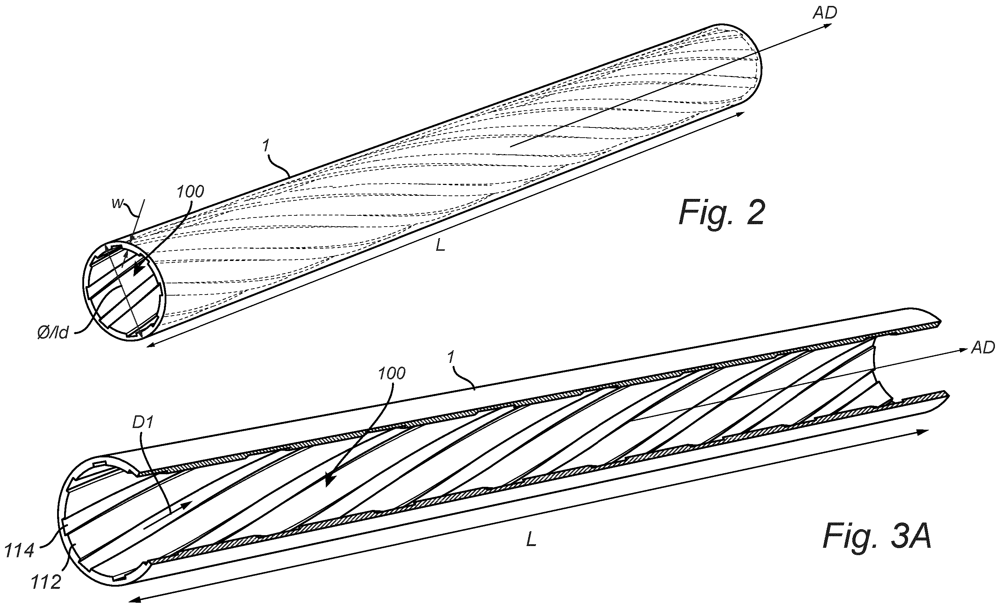

Fig. 2 shows a schematic perspective view of a portion of a polymer underfloor tube having a first length L according to one embodiment. The polymer underfloor tube 1 being configured to be placed in a floor (as shown in fig. 1) for enabling circulation of a fluid in the polymer underfloor tube 1 for performing heat exchange between the fluid in the polymer underfloor tube 1 and the floor. The inner surface 110 of the shown portion of the polymer underfloor tube 1 has a plurality of grooves 114 helically extending in an axial direction AD of the polymer underfloor tube 1. In the embodiment shown in figs. 2 and 3A, the polymer underfloor tube 1 has a circular cross-section and diameter ø in the range 8mm - 25mm and comprises 8 equidistantly distributed grooves 114 recessed in the polymer material of the underfloor tube 1 along the inner surface 100. The 8 equidistantly distributed grooves 114 are interspaced by 8 equidistantly distributed projections 112 which relative to the groves 114 are protruding radially inwards towards the center axis of the circular polymer underfloor tube 1.

The grooves 114 may be beneficial since they may cause turbulent, or unsteady, flow of the fluid inside the tube at lower Re-numbers than what is previously disclosed. As a consequence of the turbulent flow a more efficient heat exchange between the fluid and the floor, and eventually the building, may be achieved.

Fig. 3A is a schematic cutaway drawing in a perspective view of the portion of a polymer underfloor tube 1 shown in fig. 2. In the cutaway drawing the plurality of grooves 114 in the inner surface 100, helically extending in the axial direction AD of the polymer underfloor tube 1, are shown in further detail. In the embodiment shown in figs. 2 and 3A, the helically extending grooves 114 complete at least ¼ of a revolution in a first direction D1 along the inner surface 100 of the polymer underfloor tube 1 at least every 90mm, which for a polymer underfloor tube 1 having a largest cross-sectional distance (ld) of 12mm equals 7.5*the largest cross-sectional distance. This means that the helically extending grooves 114 complete at least 1/12 of a revolution in a first direction D1 along the inner surface 100 of the polymer underfloor tube 1 at least every 30mm or 2,5* the largest cross-sectional distance. I.e. if you follow a single groove 114, that groove will complete a full revolution at least every 360mm. In alternative embodiments, the helically extending grooves complete at least 1/12 of a revolution in a first direction D1 along the inner surface 100 of the polymer underfloor tube 1 at least every 5* the largest cross-sectional distance, and in alternative embodiments, the helically extending grooves complete at least 1/12 of a revolution in a first direction D1 along the inner surface 100 of the polymer underfloor tube 1 at least every 10* the largest cross-sectional distance, and in alternative embodiments, the helically extending grooves complete at least 1/12 of a revolution in a first direction D1 along the inner surface 100 of the polymer underfloor tube 1 at least every 15* the largest cross-sectional distance, and in alternative embodiments, the helically extending grooves complete at least 1/12 of a revolution in a first direction D1 along the inner surface 100 of the polymer underfloor tube 1 at least every 20* the largest cross-sectional distance, and in alternative embodiments, the helically extending grooves complete at least 1/12 of a revolution in a first direction D1 along the inner surface 100 of the polymer underfloor tube 1 at least every 40* the largest cross-sectional distance.

In some embodiments, the helically extending grooves complete at least ¼ of a revolution in a first direction along the inner surface of the polymer underfloor tube at least every 60mm, i.e. if you follow a single groove, that groove will complete a full revolution at least every 240mm.

In some embodiments, the helically extending grooves complete at least 1/12 of a revolution in a first direction along an inner surface of the polymer underfloor tube at least every 300mm, i.e. if you follow a single groove, that groove will complete a full revolution at least every 1200mm.

In the embodiment shown in figs. 2 and 3A the inner surface 100 of the polymer underfloor tube 1 comprises 8 equidistantly distributed grooves 112. However, in alternative embodiments, the polymer underfloor tube 1 may comprise a plurality of grooves being in the range of 2 - 24 grooves, preferably 2 - 20 grooves or even more preferably 2 - 14 grooves.

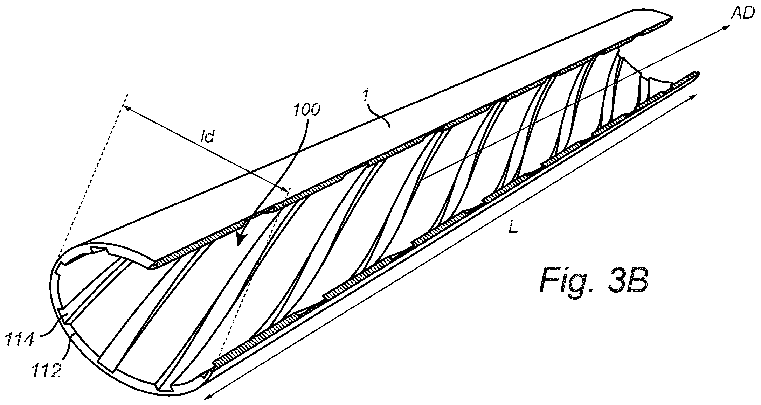

Fig. 3B is a schematic cutaway drawing in a perspective view of a portion of a polymer underfloor tube 1 having an elliptical cross-section. To minimize the manufacturing cost and/or installation space, a polymer underfloor tube 1 may have a low or narrow cross section while still being configured to house an appropriate amount of fluid per unit of length for transporting the fluid in the floor (such as described with reference to fig. 1). The inner cross-sectional area of the of the polymer underfloor tube 1 should still be made as large as possible. For the sake of mechanical properties and ease of manufacturing, an elliptically shaped cross-section is suitable. The polymer underfloor tube 1 has the same properties as the polymer underfloor tube 1 described with reference to figs. 2 and 3A but has an elliptical cross-section which has the advantage that the added height from the underfloor comfort system can be decreased. In the embodiment shown in fig. 3B, the polymer underfloor tube 1 has an elliptic cross-section with a longest cross-sectional distance ld in the range 10mm - 30mm. Such design may be advantageous in that is may also cause turbulent, or unsteady, flow of the fluid inside the tube at lower Re-numbers than what is previously disclosed. As a consequence of the turbulent flow a more efficient heat exchange between the fluid and the floor, and eventually the building, may be achieved

In the embodiments shown in figs. 2 - 3B, the grooves 114 are significantly narrower than the projections 112. More specifically, the width of the grooves is less than 80% of the width of the projections 112.

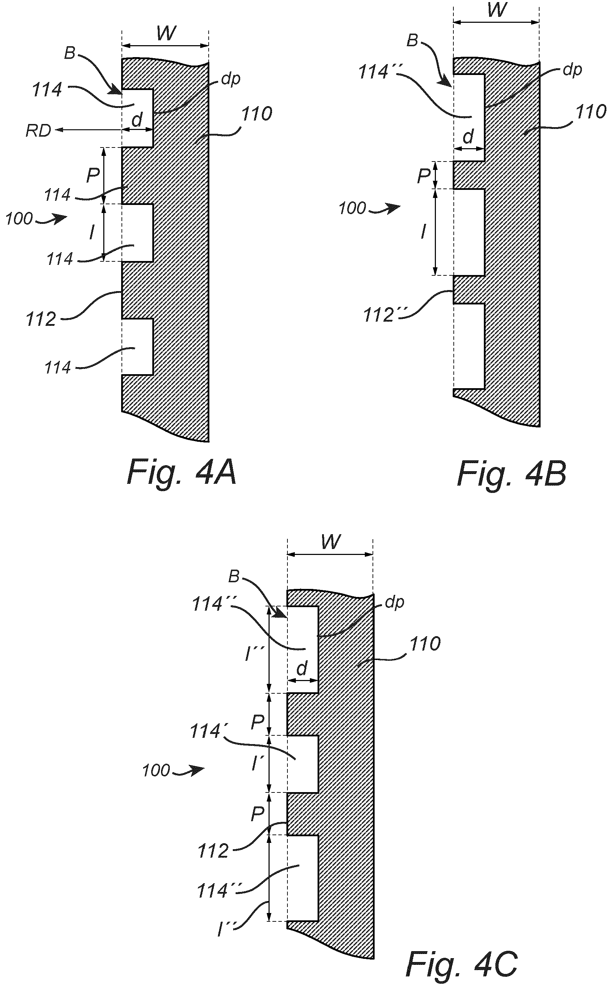

Figure 4A shows a cross-sectional view of a portion of a flattened wall of a polymer underfloor tube according to an embodiment. The grooves 114 are helically extending in an axial direction of the polymer underfloor tube. In the embodiment shown in fig. 4A, the grooves 114 are equidistantly distributed and have rectangular cross-sections with a width I and a depth d. The equidistantly distributed grooves 114 are interspaced by equidistantly distributed projections 112 having a width **P.** The equidistantly distributed projections 112 are protruding radially inwards, relative to the grooves 114, towards the center axis of the circular polymer underfloor tube, when the polymer underfloor tube is in its tube-like state. The depth **d** of a groove 114 is measured at a deepest point dp the groove 114 in a radial direction RD of the polymer underfloor tube, when the polymer underfloor tube is in its tube-like state, and the depth **d** is measured from the deepest point dp of the groove 114 to a boundary **B** having the shape of the outer circumference of the polymer underfloor tube and intersecting the highest points of projections 112 of the inner surface 100 of the polymer underfloor tube.

In the embodiment shown in 4A, all of the grooves 114 are uniform in shape in the cross-section shown. Further, the width **I** of all of the grooves 114 is the same as the width **P** of the projections 112 and as such the projections and the grooves have the same shape when seen in the cross-section shown in fig. 4A.

In the embodiment shown in fig. 4A, the grooves 114 have a depth **d** of 0.5mm and a width **I** of 1mm. In preferred embodiments, the depth is in the range of 0.1mm to 1.2mm, or preferably in the range of 0.2mm to 1mm or even more preferably in the range of 0.2mm to 0.6mm. In preferred embodiments, the width **I** is in the range of 0.5mm to 2mm, or preferably 0.5mm to 1.5mm.

It has been shown that using the developed Direct Numerical Simulation method that friction factor f in the polymer underfloor tube increases when the depth of the recesses is more than 1.5mm and that already in the range 1.5mm - 1.8mm the pressure drop is 10% - 20% higher than in a pipe having an inner surface without the helical recesses and protrusions. From this it has been concluded that depth of the recesses of less than 1.5mm is preferable, less than 1.3mm is even more preferable and less than 1.1mm is even more preferable.

Expressed differently, the helically extending grooves 114 have a cross-sectional area perpendicular to the axial direction of the polymer underfloor tube of 0.5mm2. In preferred embodiments, the cross-sectional area perpendicular to the axial direction of the polymer underfloor tube is in a range from 0.1mm2 - 5.0mm2, or in a range from 0.2mm2 to 3.0mm2, or in a range from 0.3mm2 to 2.0mm2, or in a range from 0.3mm2 to 1.5mm2.

Fig. 4B shows a cross-sectional view of a portion of a flattened wall of a polymer underfloor tube according to an embodiment similar to the embodiment shown in fig. 4A. Just as in the embodiment shown in fig. 4A, the grooves 114 are helically extending in an axial direction of the polymer underfloor tube and the grooves 114 are equidistantly distributed and have rectangular cross-sections with a width **I** and a depth **d.** The equidistantly distributed grooves 114 are just as in fig. 4A interspaced by equidistantly distributed projections 112 having a width **P.** The equidistantly distributed projections 112 are protruding radially inwards, relative to the grooves 114, towards the center axis of the circular polymer underfloor tube, when the polymer underfloor tube is in its tube-like state. The difference with the embodiment of fig. 4B, in comparison to the embodiment shown in fig. 4A, is that the projections 112 are significantly narrower. I.e. has a significantly smaller width **P.** Having more narrow projections means that less material is needed to create the same number of projections, which means that helical grooves capable of increasing the propensity for a turbulent flow can be made with less material consumed.

Fig. 4C shows a cross-sectional view of a portion of a flattened wall of a polymer underfloor tube according to an embodiment similar to the embodiments shown in figs. 4A and 4B. Just as in the embodiments shown in figs. 4A and 4B, the grooves 114 are helically extending in an axial direction of the polymer underfloor tube and the grooves 114 have rectangular cross-sections with a width **I** and a depth **d.** However, the grooves 114', 114" in the embodiment shown in fig. 4C are not equidistantly distributed. On the contrary, a first groove 114' is narrower than two second grooves 114". The first groove 114' has a first width I' while the two second grooves 114" have a second width I". The first width I' is more than 20% smaller than the second width I", preferably more than 30% smaller. The projections 112 in the embodiment shown in fig. 4C have a width **P** which is more than 20% smaller than the second width I" and preferably more than 30% smaller than the second width I''. Also, the projections 112 have a width **P** which is more than 10% smaller than the first width I".

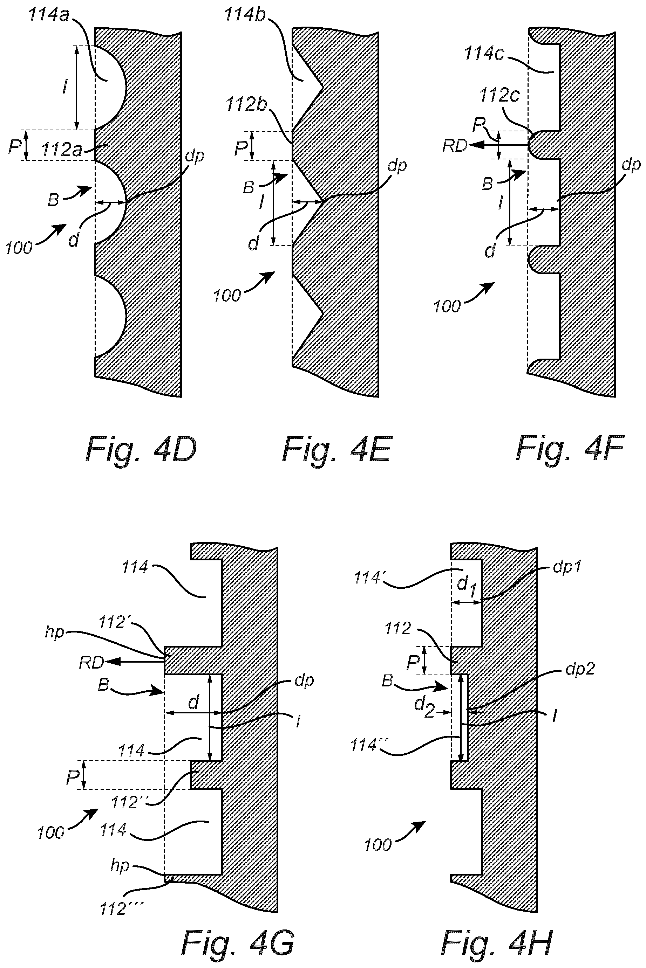

Fig. 4D shows a cross-sectional view of a portion of a flattened wall of a polymer underfloor tube according to an embodiment similar to the embodiments shown in figs. 4A -4C. Just as in the embodiments shown in figs. 4A - 4C, the grooves 114a are helically extending in an axial direction of the polymer underfloor tube and the grooves 114a are equidistantly distributed. The difference with the embodiment of fig. 4D, in comparison to the embodiment shown in figs. 4A - 4C is that the grooves 114a, instead of being rectangular, has the shape of a circular segment. One advantage with grooves 114a not having sharp edges is that they may be easier to manufacture and may result in a polymer underfloor tube with a higher wall strength and/or less pressure-drop. The depth **d** of the grooves 114a is measured from the deepest point **dp** of the grooves 114a being a center position of the groove 114a when shaped as a circular segment.

Fig. 4E shows a cross-sectional view of a portion of a flattened wall of a polymer underfloor tube according to an embodiment similar to the embodiments shown in figs. 4A -4D. Just as in the embodiments shown in figs. 4A - 4D, the grooves 114b are helically extending in an axial direction of the polymer underfloor tube and the grooves 114b are equidistantly distributed. The difference with the embodiment of fig. 4E, in comparison to the embodiment shown in figs. 4A - 4C is that the grooves 114b, instead of being rectangular, has a triangular shape. One advantage with grooves 114b having angled surfaces towards a deepest point **dp** is that they may be easier to manufacture and may result in a polymer underfloor tube with a higher wall strength and/or less pressure-drop. The depth **d** of the grooves 114b is measured from the deepest point dp of the grooves 114b, being a corner of the triangular shaped groove 114b.

Fig. 4F shows a cross-sectional view of a portion of a flattened wall of a polymer underfloor tube according to an embodiment similar to the embodiments shown in figs. 4A -4E. Just as in the embodiments shown in figs. 4A - 4E, the grooves 114c are helically extending in an axial direction of the polymer underfloor tube and the grooves 114b are equidistantly distributed. The difference with the embodiment of fig. 4F, in comparison to the embodiment shown in figs. 4A - 4C is that the projections 112, instead of being rectangular, has a rounded or circular shape in a radial direction RD towards the center of the polymer underfloor tube when the polymer underfloor tube is in its tube-like state. One advantage with projections 112 having rounded surfaces in the radial direction RD is that they may result in a polymer underfloor tube with less pressure-drop.

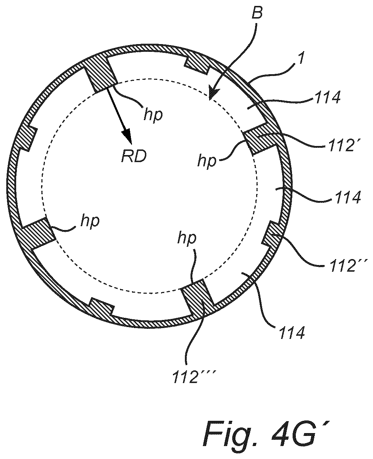

Fig. 4G and 4G' shows cross-sectional views of a portion of a polymer underfloor tube. Fig. 4G shows a cross-sectional view of a flattened wall whereas fig. 4G' shows a cross-sectional view of the polymer underfloor tube 1 in its tube-like state. Just as in the embodiments shown in figs. 4A - 4F, the grooves 114 are helically extending in an axial direction of the polymer underfloor tube 1 and the grooves 114 are equidistantly distributed, and just as in the embodiments shown in figs. 4A - 4C, the grooves 114 are rectangular. The difference with the embodiment of figs. 4G and 4G', in comparison to the embodiment shown in figs. 4A - 4F is that the projections have different heights, i.e. they protrude with different distances in the radial direction RD as measured from the deepest point dp of the grooves 114 or from the periphery of the outer surface of the polymer underfloor tube 1. A first and third projection 112', 112‴ protrudes a first distance. The first and third projections are interspaced by a second projection 112" which protrudes a second, smaller, distance in the radial direction. In the embodiment shown in figs. 4G and 4G', the second projection 112" protrudes less than 80% of the first and third projections 112', 112‴, measured from the deepest point dp of the recess 114. The depth **d** of the grooves 114 is measured in a radial direction RD of the polymer underfloor tube 1, from the deepest point dp of the groove 114 to a boundary **B** having the shape of the outer circumference of the polymer underfloor tube 1 and intersecting the highest points hp of at least two projections 112', 112‴. As the second projection 112" protrudes less than 80% of the first and third projections 112', 112‴, the second projection 112" does not intersect the boundary **B.**

Fig. 4H shows a cross-sectional view of a portion of a flattened wall of a polymer underfloor tube according to an embodiment similar to the embodiment shown in fig. 4G and 4G'. Just as in the embodiments shown in figs. 4A - 4G', the grooves 114 are helically extending in an axial direction of the polymer underfloor tube and the grooves 114 are equidistantly distributed, and just as in the embodiments shown in figs. 4A - 4C, the grooves 114 are rectangular. The difference with the embodiment of fig. 4H, in comparison to the embodiment shown in figs. 4A - 4F is that the grooves 114', 114" have different depths d1, d2, as measured from the deepest points dp1, dp2 of the grooves 114', 114" in a radial direction RD of the polymer underfloor tube, when the polymer underfloor tube is in its tube-like state, to a boundary **B** having the shape of the outer circumference of the polymer underfloor tube and intersecting the highest points of projections 112 of the inner surface 100 of the polymer underfloor tube. In the embodiment shown in fig. 4H, a first groove 114' has a first depth d1 and a second groove 114" has a second depth d2. In the embodiment shown in fig. 4H, the second depth d2 is less than 80% of the first depth d1, measured between the boundary **B** and the deepest point dp1 of the first groove 114' and the deepest point dp2 of the second groove, respectively.

In all of the embodiments shown in figs. 4D - 4H, the projections 112 are significantly narrower than the grooves 114. I.e. the width **P** of the projections 112 is much less than the width **I** of the grooves 114. More specifically, the width **P** of the projections 112 is less than 80% of than the width **I** of the grooves 114.

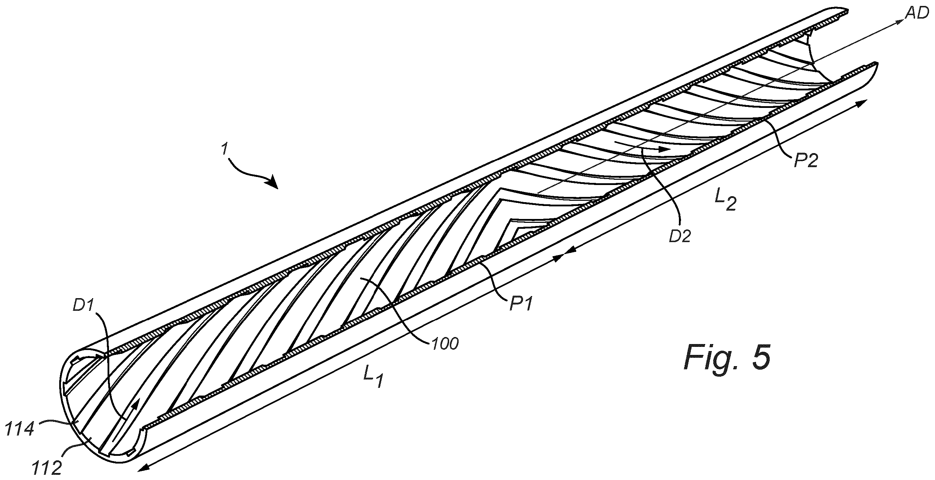

Fig. 5 is a schematic cutaway drawing in a perspective view of a portion of a polymer underfloor tube 1 according to an embodiment. The inner surface 100 of a first portion P1 of the polymer underfloor tube 1 has a plurality of grooves 114, more specifically 8, which are helically extending in an axial direction AD of the polymer underfloor tube 1. The plurality of grooves 114 of the first portion P1 complete at least 1/12 of a revolution in a first direction D1 over a first length L1. In the embodiment shown in fig. 5, the first length L1 is shorter than 200*the largest cross-sectional, more specifically in the range 10*the largest cross-sectional distance - 100*the largest cross-sectional, and even more specifically in the range 10*the largest cross-sectional distance - 70*the largest cross-sectional distance. I.e. as the largest cross-sectional distance is 12mm, the first length L1 is in the range 120mm - 2400mm, more specifically in the range 120mm - 1200mm and even more specifically in the range 120mm - 840mm. More specifically the first length L1 in the embodiment shown in fig. 5 is in the range 100mm - 400mm. The inner surface 100 of a second portion P2 of the polymer underfloor tube 1 also has 8 grooves 114 helically extending in an axial direction AD of the polymer underfloor tube 1. The plurality of grooves 114 of the second portion P2 complete at least 1/12 of a revolution in a second direction D2, different from the first direction D1, over a second length L2. In the embodiment shown in fig. 5, the second length L2 is shorter than 200*the largest cross-sectional, more specifically in the range 10*the largest cross-sectional distance - 100*the largest cross-sectional, and even more specifically in the range 10*the largest cross-sectional distance - 70*the largest cross-sectional distance. I.e. as the largest cross-sectional distance is 12mm, the first length L1 is in the range 120mm - 2400mm, more specifically in the range 120mm - 2400mm and even more specifically in the range 120mm - 840mm. More specifically the second length L2 in the embodiment shown in fig. 5 is in the range 100mm - 400mm.

Expressed differently, the grooves may change revolution direction from the first direction D1 to the second direction D2 once along a length of the underfloor tube 1 of 100mm - 2400mm, or preferably 200mm - 1500mm or 300mm - 1200mm, in the axial direction AD.

The alternation of the direction of the helical grooves 114 induces further turbulence in the flow and counteracts the creation of a twisting laminar flow. The problem with a twisting laminar flow is the same as in a smooth pipe, i.e. that there is a creation of layers of fluid with different temperature across the tube which reduces the heat exchange between the tube wall and the fluid, as the difference in temperature between the fluid and the tube wall becomes less as the fluid that travels closest to the wall in a laminar flow is heated more than the fluid in the center of the tube. This effect is reduced by the mixing of the fluid which consequently increases the heat transfer and thus the efficiency of the tube. The alteration of the direction of the helically extending grooves acts to significantly increase the mixing of fluid in the tube by increasing the mixing of high-velocity fluid with low-velocity fluid. The mixing of high-velocity fluid with low-velocity fluid creates relative movement between the fluid flows which generates fluid friction which (as described in the beginning of the detailed description) incites the generation of an unsteady flow.

Comparative simulations were performed in which tubes having straight grooves, i.e. grooves which are not helically extending were compared with tubes having helically extending grooves which do not alternate direction (such as for example described with reference to figs. 3A - 3C) and with tubes having helically extending grooves which alternate direction (such as for example described with reference to fig. 5).

The results from the simulations are presented in table 1 where it is clear that the flow becomes laminar at Re = 2050 for the straight grooves, Re = 1950 for the helically extending grooves which do not alternate direction and Re = 1700 for the helically extending grooves which alternates direction. I.e. the flow stays turbulent above Re = 2050 for the straight grooves, above Re = 1950 for the helically extending grooves which do not alternate direction and above Re = 1700 for the helically extending grooves which alternates direction.

These results suggest that the design with helically extending grooves which alternate direction is able to trigger an unsteady flow at significantly lower Re-numbers than the other two designs while the friction factor f is practically the same at Re = 2300 for all designs.

**Table 1: Time-averaged DNS results for Pr = 75 and various Re-numbers in the evaluation of straight, continuous helical and alternating helical groove designs. The simulations are started at Re = 2300 where all designs show an unsteady flow and then the Re-number is successively lowered until the flow becomes laminar.**

| | Straight | | | Continuous | | | Alternating | | |
|---|---|---|---|---|---|---|---|---|---|
| *Re* | *Nu* | *f* | Flow type | *Nu* | *f* | Flow type | *Nu* | *f* | Flow type |
| 2300 | 43 | 0.0471 | unsteady | 44 | 0.0477 | unsteady | 43 | 0.0474 | unsteady |
| 2050 | 6-7 | 0.032 | laminar | 34 | 0.0435 | unsteady | 33 | 0.0414 | unsteady |
| 1950 | - | - | - | 6-7 | 0.0332 | laminar | 30 | 0.0394 | unsteady |
| 1800 | - | - | - | - | - | - | 26 | 0.0414 | unsteady |
| 1700 | - | - | - | - | - | - | 6-7 | 0.038 | laminar |

Comparative DNS simulations were further performed to evaluate how the number of helically extending grooves affects the ability of the grooves to induce an unsteady or turbulent flow at different Re.

In the simulations, a polymer tube having a length of 35*the largest cross-sectional distance and having helically extending grooves having a depth of 0.6mm was used.

Surprisingly, the effect that the helically extending grooves introduces turbulence is decreased if the number of helically extending grooves exceeds a certain number. From the results it can be concluded that 16 grooves or less is preferable, 14 or less is even more preferable and 12 or less is even more preferable. In table 2 below some of the results of the simulations are presented:

**Table 2: Steady state flow type observed for various Re-numbers, and number of equally spaced grooves alternatingly helically extending. The simulations are started at Re = 2300, where all designs show an unsteady flow, and then the Re-number is successively reduced until the flow becomes laminar.**

| *Re* | *Grooves = 16* | *Grooves = 24* | *Grooves = 32* |
|---|---|---|---|
| 2300 | Turbulent | Turbulent | Turbulent |
| 2050 | Turbulent | Turbulent | Turbulent |
| 1950 | Turbulent | Turbulent | Laminar |
| 1800 | Turbulent | Laminar | - |
| 1700 | Laminar | - | - |

In the embodiment shown in fig. 5, the helically extending grooves 114 of the first portion P1 complete at least ¼ of a revolution in a first direction D1 along the inner surface 100 of the polymer underfloor tube 1 at least every 90mm and the helically extending grooves 114 of the second portion P2 complete at least ¼ of a revolution in a second direction D2 along the inner surface 100 of the polymer underfloor tube 1 at least every 90mm. More specifically, in the embodiment shown in fig. 5, the helically extending grooves 114 of the first portion P1 complete at least ¼ of a revolution in a first direction D1 along the inner surface 100 of the polymer underfloor tube 1 at least every 60mm and the helically extending grooves 114 of the second portion P2 complete at least ¼ of a revolution in a second direction D2 along the inner surface 100 of the polymer underfloor tube 1 at least every 60mm.

In the embodiment shown in fig. 5, the grooves 114 are continuous grooves meaning that the same groove will alter direction after the first length L1, when the groove passes from the first portion P1 to the second portion P2. However, in alternative embodiments it is possible that the grooves are discontinuous meaning that there will be a portion between portions of helically extending grooves along which there are no grooves.

Comparative DNS simulations were further performed to evaluate how the twist rate of the helically extending grooves affect the ability of the grooves to induce an unsteady or turbulent flow at different Re. I.e. how many revolutions the helically extending grooves makes along a given length of polymer pipe.

Also in these simulations, a polymer tube having a length of 35*the largest cross-sectional distance and having helically extending grooves having a depth of 0.6mm was used having 16 helically extending grooves. In the simulation, the helically extending grooves extend in a first direction: 1/12, 1/8, 1/2 and 1 complete revolution around the pipe axis over 17,5* the largest cross-sectional distance and then continuously alternating such that they extend in a second direction: 1/12, 1/8, 1/2 and 1 complete revolution around the pipe axis over 17,5* the largest cross-sectional distance. The simulation results are presented in table 3 below:

**Table 3: Steady state flow type observed for different Re-numbers and groove twisting rates for the alternating helical groove design. The simulations are started at Re = 2300, where all designs show an unsteady flow, and then the Re-number is successively reduced until the flow becomes laminar.**

| *Re* | *Twist 0* | *Twist 1*/*12* | *Twist 1*/*8* | *Twist 1*/*2* | *Twist 1* |
|---|---|---|---|---|---|
| 2300 | Turbulent | Turbulent | Turbulent | Turbulent | Turbulent |
| 2050 | Laminar | Turbulent | Turbulent | Turbulent | Turbulent |
| 1950 | - | Turbulent | Turbulent | Turbulent | Turbulent |
| 1800 | - | Laminar | Turbulent | Turbulent | Turbulent |
| 1700 | - | - | Laminar | Laminar | Laminar |

The findings show that a twist rate of 1/8 revolution around the pipe axis over 17,5* the largest cross-sectional distance is sufficient to induce a turbulent flow down to the range Re= 1700 - Re=1800. Increasing the twist rate further will not increase the transition to turbulent flow further.

In the embodiment shown in fig. 5, the polymer underfloor tube 1 is illustrated with rectangular grooves 114 (such as shown in further detail in fig. 4A). The rectangular grooves have a depth **d** in the range of 0.1mm to 1.2mm, more specifically in the range of 0.2mm to 1mm and even more specifically in the range of 0.2mm to 0.6mm. However, it is equally conceivable that the embodiment with helical grooves which alternate direction is implemented using the grooves of any one of the embodiments of figs. 4A - 4H.

In alternative embodiments, the polymer underfloor tube 1 having the helical grooves with the altering direction may be a polymer underfloor tube having an elliptical cross-section, such as described with reference to fig. 3B.

In the following numbered aspect groups of the present invention are provided. The references to other aspects relate to aspects within that group. The scope of protection is however defined by the appended claims.

### Aspect group 1

1. A polymer underfloor tube (1) for transferring thermal energy to a floor, the polymer underfloor tube (1) being configured to be arranged in the floor for enabling circulation of a fluid in the polymer underfloor tube (1) and for performing heat exchange between the fluid in the polymer underfloor tube (1) and the floor, wherein:
   an inner surface (100) of at least one portion (P1) of the polymer underfloor tube (1) has a plurality of grooves (114), the plurality being in the range of 2 to 14, and helically extending in an axial direction (AD) of the polymer underfloor tube (1),
   at least 2 of the helically extending helically extending grooves (114) have a depth in a range from 0.1mm - 0.6mm.
2. The polymer underfloor tube (1) according to aspect 1, wherein at least 2 of the helically extending grooves (114) have a depth (d) in the range of 0.1mm to 0.5mm.
3. The polymer underfloor tube (1) according to aspect 2, wherein at least 2 of the helically extending grooves (114) have a depth (d) in the range of 0.1mm to 0.4mm.
4. The polymer underfloor tube (1) according to any one of aspects 1 - 3, wherein the plurality of grooves is in the range of 2 to 12.
5. The polymer underfloor tube (1) according to aspect 4, wherein the plurality of grooves is in the range of 4 to 12.
6. The polymer underfloor tube (1) according to aspect 5, wherein the plurality of grooves is in the range of 4 to 10.
7. The polymer underfloor tube (1) according to any one of the preceding aspects, wherein the helically extending grooves (114) complete ¼ of a revolution along the inner surface (100) of the polymer underfloor tube (1) at least every 45mm.
8. The polymer underfloor tube (1) according to aspect 7, wherein the helically extending grooves (114) complete ¼ of a revolution along the inner surface (100) of the polymer underfloor tube (1) at least every 30mm.
9. The polymer underfloor tube (1) according to any one of the preceding aspects, wherein an inner surface (100) of at least one second portion (P2) of the polymer underfloor tube (1) has a plurality of grooves (114), the plurality being in the range of 2 to 14, and helically extending in an axial direction (AD) of the polymer underfloor tube (1), wherein the helically extending grooves (114) of the first portion (P1) extends in a first helical direction (D1) and the helically extending grooves (114) of the second portion (P2) extends in a second helical direction (D2).
10. The polymer underfloor tube (1) according to any one of the preceding aspects, wherein at least one of the first or second portion (P1, P2) comprises at least 2 helically extending grooves (114) being equidistantly distributed.

### Aspect group 2

1. A polymer underfloor tube (1) for transferring thermal energy to a floor, the polymer underfloor tube (1) being configured to be arranged in the floor for enabling circulation of a fluid in the polymer underfloor tube (1) and for performing heat exchange between the fluid in the polymer underfloor tube (1) and the floor, wherein:
   an inner surface (100) of at least one first portion (P1) of the polymer underfloor tube (1) has a plurality of grooves (114), the plurality being in the range of 2 to 24,
   the grooves (114) are helically extending in an axial direction (AD) of the polymer underfloor tube (1), and
   at least 2 of the helically extending grooves (114) have a depth (d) in the range of 0.1mm to 1.5mm.
2. The polymer underfloor tube (1) according to aspect 1, wherein the at least 2 of the helically extending grooves (114) have a depth (d) in the range of 0.1mm to 1.2mm.
3. The polymer underfloor tube (1) according to aspect 2, wherein the at least 2 of the helically extending grooves (114) have a depth (d) in the range of 0.2mm to 1mm.
4. The polymer underfloor tube (1) according to aspect 3, wherein the at least 2 of the helically extending grooves (114) have a depth (d) in the range of 0.2mm to 0.6mm.
5. The polymer underfloor tube (1) according to any one of aspects 1 - 4, wherein at least 2 of the helically extending grooves (114) of the first or second portion have a cross-sectional area perpendicular to the axial direction (AD) in a range from 0.1mm2 - 5.0mm2.
6. The polymer underfloor tube (1) according to aspect 5, wherein at least 2 of the helically extending grooves (114) of at least one of the first or second portion (P1, P2) have a cross-sectional area perpendicular to the axial direction (AD) in a range from 0.2mm2 to 3.0mm2, or in a range from 0.3mm2 to 2.0mm2, or in a range from 0.3mm2 to 1.5mm2.
7. The polymer underfloor tube (1) according to any one of aspect 1 - 6, wherein the inner surface (100) of the at least one portion (P1) of the polymer underfloor tube (1) has a plurality of grooves (114), the plurality being in the range of 2 to 20.
8. The polymer underfloor tube (1) according to aspect 7, wherein the inner surface (100) of the at least one portion (P1) of the polymer underfloor tube (1) has a plurality of grooves (114), the plurality being in the range of 2 to 14.
9. The polymer underfloor tube (1) according to any one of aspect 1 - 8, wherein the polymer underfloor tube (1) has a largest cross-sectional distance (ld) in a direction perpendicular to the axial direction (AD) of the polymer underfloor tube (1), and wherein the plurality of grooves (114) of the first portion (P1) complete at least 1/12 of a revolution in a first direction (D1), over a first length (L1) of the polymer underfloor tube (1) being in the range 10*the largest cross-sectional distance - 200*the largest cross-sectional distance.
10. The polymer underfloor tube (1) according to aspect 9, wherein the first length (L1) is in the range 10*the largest cross-sectional distance - 100*the largest cross-sectional distance
11. The polymer underfloor tube (1) according to aspect 10, wherein the first length (L1) is in the range 10*the largest cross-sectional distance - 70*the largest cross-sectional distance.
12. The polymer underfloor tube (1) according to any one of aspects 9 - 11, wherein:
   an inner surface (100) of a second portion (P2) of the polymer underfloor tube (1) has a plurality of grooves (114),
   the plurality being in the range of 2 to 24,
   the grooves (114') of the second portion (P2) are helically extending in an axial direction (AD) of the polymer underfloor tube (1), and
   the plurality of grooves (114') of the second portion (P2) complete at least 1/12 of a revolution in a second direction (D2), different from the first direction (D1), over a second length (L2) of the polymer underfloor tube (1) being in the range 10*the largest cross-sectional distance - 200*the largest cross-sectional distance.
13. The polymer underfloor tube (1) according to aspect 12, wherein the second length (L2) is in the range 10*the largest cross-sectional distance - 100*the largest cross-sectional distance.
14. The polymer underfloor tube (1) according to aspect 13, wherein the second length (L2) is in the range 10*the largest cross-sectional distance - 70*the largest cross-sectional distance.
15. The polymer underfloor tube (1) according to any one of aspects 1 - 14, wherein the helically extending grooves (114) of at least one of the first or second portions (P1, P2) complete at least ¼ of a revolution in a first direction (D1) along the inner surface (100) of the polymer underfloor tube (1) at least every 90mm.
16. The polymer underfloor tube (1) according to aspect 1 - 15, wherein the helically extending grooves (114,114') of at least one of the first or second portions complete at least ¼ of a revolution in a first direction (D1) along the inner surface (100) of the polymer underfloor tube (1) at least every 60mm.
17. The polymer underfloor tube (1) according to any one of aspects 1 - 16, wherein the helically extending grooves (114) of at least one of the first or second portion (P1, P2) are equidistantly distributed.
18. The polymer underfloor tube (1) according to any one of aspects 1 - 17, wherein the depth (d) of a groove is measured at a deepest point (dp) the groove (114).
19. The polymer underfloor tube (1) according to aspect 18, wherein the depth (d) of a groove (114) is measured in a radial direction (RD) of the polymer underfloor tube (1), from the deepest point (dp) of the groove (114) to a boundary (B) having the shape of the outer circumference of the polymer underfloor tube (1) and intersecting the highest points (hp) of at least two projections (112) on the inner surface (100) of the polymer underfloor tube (1).
20. The polymer underfloor tube (1) according to any one of aspects 1 - 19, wherein the polymer underfloor tube (1) has a circular cross-section and a diameter (ø) in the range 8mm - 25mm.
21. The polymer underfloor tube (1) according to any one of aspects 1 - 20, wherein the polymer underfloor tube (1) has an elliptic cross-section and a longest cross-sectional distance (ld) in the range 10mm - 30mm.
22. The polymer underfloor tube (1) according to any one of aspects 12 and 21, wherein at least 2 of the helically extending grooves (114) of the first and second portion form continuous helically extending grooves (114), alternating direction at least one time over a length of polymer underfloor tube (1) being in the range 10*the largest cross-sectional distance - 200*the largest cross-sectional distance, preferably in the range 10*the largest cross-sectional distance - 100*the largest cross-sectional distance, and more preferably in the range 10*the largest cross-sectional distance - 70*the largest cross-sectional distance.

### Aspect group 3

1. A polymer underfloor tube (1) for transferring thermal energy to a floor, the polymer underfloor tube (1) being configured to be arranged in the floor for enabling circulation of a fluid in the polymer underfloor tube (1) and for performing heat exchange between the fluid in the polymer underfloor tube (1) and the floor, wherein:
   the polymer underfloor tube (1) has a largest cross-sectional distance (ld) in a direction perpendicular to the axial direction (AD) of the polymer underfloor tube (1),
   an inner surface (100) of a first portion (P1) of the polymer underfloor tube (1) has a plurality of grooves (114), the plurality being in the range of 2 to 24, and helically extending in an axial direction (AD) of the polymer underfloor tube (1), and wherein the plurality of grooves (114) of the first portion (P1) complete at least 1/12 of a revolution in a first direction (D1) over a first length (L1) of the polymer underfloor tube (1) being in the range 12*the largest cross-sectional distance - 200*the largest cross-sectional distance, and
   an inner surface (100) of a second portion (P2) of the polymer underfloor tube (1) has a plurality of grooves (114), the plurality being in the range of 4 to 24, and helically extending in an axial direction (AD) of the polymer underfloor tube (1), and wherein the plurality of grooves (114) of the second portion (P2) complete at least 1/12 of a revolution in a second direction (D2), different from the first direction (D1), over a second length (L2) of the polymer underfloor tube (1) being in the range 10*the largest cross-sectional distance - 200*the largest cross-sectional distance.
2. The polymer underfloor tube (1) according to aspect 1, wherein at least one of the first length (L1) or the second length (L2) is in the range 10*the largest cross-sectional distance - 100*the largest cross-sectional distance, preferably in the range 10*the largest cross-sectional distance - 70*the largest cross-sectional distance.
3. The polymer underfloor tube (1) according to any one of aspects 1 and 2, wherein at least 2 of the helically extending grooves (114) of the first and second portion form continuous helically extending grooves (114), alternating direction at least one time over a length of polymer underfloor tube (1) being in the range 10*the largest cross-sectional distance - 200*the largest cross-sectional distance, preferably in the range 10*the largest cross-sectional distance - 100*the largest cross-sectional distance, and more preferably in the range 10*the largest cross-sectional distance - 70*the largest cross-sectional distance.
4. The polymer underfloor tube (1) according to any one of aspects 1 - 3, wherein at least 2 of the helically extending grooves (114) of the first or second portion have a depth (d) in the range of 0.1mm to 1.2mm.
5. The polymer underfloor tube (1) according to aspect 4, wherein at least 2 of the helically extending grooves (114) of the first or second portion (P1, P2) have a depth (d) in the range of 0.2mm to 1mm.
6. The polymer underfloor tube (1) according to aspect 5, wherein at least 2 of the helically extending grooves (114) of the first or second portion (P1, P2) have a depth (d) in the range of 0.2mm to 0.6mm.
7. The polymer underfloor tube (1) according to any one of aspects 1 - 6, wherein at least 2 of the helically extending grooves (114) of the first or second portion have a cross-sectional area perpendicular to the axial direction (AD) in a range from 0.1mm2 - 5.0mm2.
8. The polymer underfloor tube (1) according to aspect 7, wherein at least 2 of the helically extending grooves (114) of at least one of the first or second portion (P1, P2) have a cross-sectional area perpendicular to the axial direction (AD) in a range from 0.2mm2 to 3.0mm2, or in a range from 0.3mm2 to 2.0mm2, or in a range from 0.3mm2 to 1.5mm2.
9. The polymer underfloor tube (1) according to any one of aspects 1 - 8, wherein the helically extending grooves (114) of the first portion (P1) complete ¼ of a revolution in the first direction (D1) along the inner surface (100) of the polymer underfloor tube (1) at least every 150mm, and the helically extending grooves (114) of the second portion (P2) complete ¼ of a revolution in the second direction (D2) along the inner surface (100) of the polymer underfloor tube (1) at least every 150mm.
10. The polymer underfloor tube (1) according to any one of aspects 1 - 8, wherein the helically extending grooves (114) of the first portion (P1) complete ¼ of a revolution in the first direction (D1) along the inner surface (100) of the polymer underfloor tube (1) at least every 90mm, and the helically extending grooves (114) of the second portion (P2) complete ¼ of a revolution in the second direction (D2) along the inner surface (100) of the polymer underfloor tube (1) at least every 90mm.
11. The polymer underfloor tube (1) according to any one of aspect 1 - 10, wherein the plurality of grooves (114) of at least one of the first or second portions (P1, P2) is a plurality in the range of 2 to 20.
12. The polymer underfloor tube (1) according to aspect 11, wherein the plurality of grooves (114) of at least one of the first or second portions (P1, P2) is a plurality in the range of 2 to 14.
13. The polymer underfloor tube (1) according to any one of aspects 1 - 12, wherein the helically extending grooves (114) of at least one of the first or second portion (P1, P2) are equidistantly distributed.
14. The polymer underfloor tube (1) according to any one of aspects 4 - 13, wherein the depth (d) of a groove is measured at a deepest point (dp) the groove (114).
15. The polymer underfloor tube (1) according to aspect 14, wherein the depth (d) of a groove (114) is measured in a radial direction (RD) of the polymer underfloor tube (1), from the deepest point (dp) of the groove (114) to a boundary (B) having the shape of the outer circumference of the polymer underfloor tube (1) and intersecting the highest points (hp) of at least two projections (112) on the inner surface (100) of the polymer underfloor tube (1).
16. The polymer underfloor tube (1) according to any one of aspects 1 - 15, wherein the polymer underfloor tube (1) has a circular cross-section and a diameter (ø) in the range 8mm - 25mm.
17. The polymer underfloor tube (1) according to any one of aspects 1 - 16, wherein the polymer underfloor tube (1) has an elliptic cross-section and a longest cross-sectional distance (ld) in the range 10mm - 30mm.

## Claims

1. A polymer underfloor tube (1) for transferring thermal energy to or from a floor, the polymer underfloor tube (1) being configured to be arranged in the floor for enabling circulation of a fluid in the polymer underfloor tube (1) and for performing heat exchange between the fluid in the polymer underfloor tube (1) and the floor, wherein:
the polymer underfloor tube (1) has a largest cross-sectional distance (ld) in a direction perpendicular to an axial direction (AD) of the polymer underfloor tube (1),
an inner surface (100) of a first portion (P1) of the polymer underfloor tube (1) has a plurality of grooves (114), the plurality being in the range of 2 to 24, helically extending in the axial direction (AD) of the polymer underfloor tube (1), at least 2 of the helically extending grooves (114) of the first portion (P1) have a depth (d) in the range of 0.1mm to 1.5mm and complete at least 1/12 of a revolution in a first direction (D1) over a first length (L 1) of the polymer underfloor tube (1) being shorter than 200*the largest cross-sectional distance, and
an inner surface (100) of a second portion (P2) of the polymer underfloor tube (1) has a plurality of grooves (114), the plurality being in the range of 2 to 24, helically extending in the axial direction (AD) of the polymer underfloor tube (1), at least 2 of the helically extending grooves (114) ) of the second portion (P2) have a depth (d) in the range of 0.1mm to 1.5mm and complete at least 1/12 of a revolution in a second direction (D2), different from the first direction (D1), over a second length (L2) of the polymer underfloor tube (1) being shorter than 200*the largest cross-sectional distance.

2. The polymer underfloor tube (1) according to claim 1, wherein at least one of the first length (L1) or the second length (L2) is in the range 10*the largest cross-sectional distance - 100*the largest cross-sectional distance, preferably in the range 10*the largest cross-sectional distance - 70*the largest cross-sectional distance.

3. The polymer underfloor tube (1) according to any one of claims 1 and 2, wherein at least 2 of the helically extending grooves (114) of the first and second portion form continuous helically extending grooves (114), alternating direction at least one time over a length of polymer underfloor tube (1) being in the range 10*the largest cross-sectional distance - 200*the largest cross-sectional distance, preferably in the range 10*the largest cross-sectional distance - 100*the largest cross-sectional distance, and more preferably in the range 10*the largest cross-sectional distance - 70*the largest cross-sectional distance.

4. The polymer underfloor tube (1) according to any one of claims 1 - 3, wherein at least 2 of the helically extending grooves (114) of the first or second portion have a depth (d) in the range of 0.1mm to 1.2mm, preferably in the range of 0.2mm to 1mm.

5. The polymer underfloor tube (1) according to claim 4, wherein at least 2 of the helically extending grooves (114) of the first or second portion (P1, P2) have a depth (d) in the range of 0.2mm to 0.6mm.

6. The polymer underfloor tube (1) according to any one of claims 1 - 5, wherein at least 2 of the helically extending grooves (114) of the first or second portion have a cross-sectional area perpendicular to the axial direction (AD) in a range from 0.1mm2 - 5.0mm2.

7. The polymer underfloor tube (1) according to claim 6, wherein at least 2 of the helically extending grooves (114) of at least one of the first or second portion (P1, P2) have a cross-sectional area perpendicular to the axial direction (AD) in a range from 0.2mm2 to 3.0mm2, or in a range from 0.3mm2 to 2.0mm2, or in a range from 0.3mm2 to 1.5mm2.

8. The polymer underfloor tube (1) according to any one of claim 1 - 7, wherein the plurality of grooves (114) of at least one of the first or second portions (P1, P2) is a plurality in the range of 2 to 20.

9. The polymer underfloor tube (1) according to claim 8, wherein the plurality of grooves (114) of at least one of the first or second portions (P1, P2) is a plurality in the range of 2 to 16, preferably in the range of 2 to 14.

10. The polymer underfloor tube (1) according to any one of claims 1 - 9, wherein the helically extending grooves (114) of at least one of the first or second portion (P1, P2) are equidistantly distributed.

11. The polymer underfloor tube (1) according to any one of claims 1 - 10, wherein the depth (d) of a groove is measured at a deepest point (dp) the groove (114).

12. The polymer underfloor tube (1) according to claim 11, wherein the depth (d) of a groove (114) is measured in a radial direction (RD) of the polymer underfloor tube (1), from the deepest point (dp) of the groove (114) to a boundary (B) having the shape of the outer circumference of the polymer underfloor tube (1) and intersecting the highest points (hp) of at least two projections (112) on the inner surface (100) of the polymer underfloor tube (1).

13. The polymer underfloor tube (1) according to any one of claims 1 - 12, wherein the polymer underfloor tube (1) has a circular cross-section having a diameter (ø) in the range 8mm - 25mm.

14. The polymer underfloor tube (1) according to any one of claims 1 - 13, wherein the polymer underfloor tube (1) has an elliptic cross-section and a longest cross-sectional distance (ld) in the range 10mm - 30mm.

15. An underfloor comfort system comprising the polymer underfloor tube (1) according to any one of claims 1 - 14.
